# EUROPÄISCHE PATENTSCHRIFT

(11) **EP 1 440 995 B1**
(45) Veröffentlichungstag und Bekanntmachung des Hinweises auf die Patenterteilung: **07.08.2019**
(21) Anmeldenummer: 03001545.7
(22) Anmeldetag: 23.01.2003
(51) Int. Cl.: C08G 71/02, C08G 65/22, C08G 83/00

(54) **Hydroxylgruppenhaltige Polymere**
Hydroxyl-group containing polymers
Polymères portant les groupes hydroxyles

(43) Veröffentlichungstag der Anmeldung: 28.07.2004
(73) Patentinhaber: Rapp Polymere GmbH, 72072 Tuebingen (DE)
(72) Erfinder: Rapp, Wolfgang, Dr., 72072 Tübingen (DE); Haag, Rainer, Dr., 79117 Freiburg (DE); Stumbé, Jean-Francois, Dr., 67200 Strassburg (FR); Türk, Holger, Dipl. Chem., 73489 Jagstzell (DE)
(74) Vertreter: Reitstötter Kinzebach

(56) Entgegenhaltungen:
- EP-A- 0 200 070
- EP-A- 1 057 846
- WO-A-02/40572
- WO-A-93/02112
- WO-A2-97/27226
- DE-A1- 3 500 180
- BASINSKA T. ET AL : "Synthesis and characterisation of polystyrene alpha-t-butoxy gamma-vinylbenzyl-polyglycidol microspheres " COLLOID AND PLYMER SCIENCE, Bd. 279, 2001, Seiten 916-924, XP002249010
- DATABASE WPI Section Ch, Week 198920 Derwent Publications Ltd., London, GB; Class A28, AN 1989-148300 XP002249011 & JP 01 092281 A (MITSUBISHI PAPER MILLS LTD), 11. April 1989 (1989-04-11)

## Beschreibung

Die Erfindung betrifft hydroxylgruppenhaltige Hybridpolymere, funktionalisierte Derivate davon und deren Verwendung.

Hydroxyterminierte Hybridpolymere auf Basis schwach vernetzter Polystyrolharze werden üblicherweise hergestellt, indem Ethylenoxid mit den hydroxylgruppenhaltigen Polystyrolharzen unter basischen Bedingungen umgesetzt wird. Als mögliche Ausgangsverbindungen eignen sich Hydroxy- und 2-Methyl-1,3-dihydroxy-2-propyl-funktionalisierte Methylpolystyrolharze (DE 3500 180 A1 bzw. WO 97/27226). Die so erhaltenen Polymere besitzen gewöhnlich einen niedrigen Beladungsgrad an Hydroxylfunktionalitäten (0.1-1 mmol/g). Auch glycidyletherhaltige Hybridpolymere wurden durch Copolymerisation eines entsprechenden Styrol-terminierten Makromonomers und Styrol hergestellt (Coll. & Poly. Sci., 279 (2001) 916). Bei diesem Verfahren werden lineare Polymere ohne freie Hydroxylgruppen erhalten.

Die EP 1 057 846 A1 beschreibt ein polymeres Polyol, beispielsweise ein Polyglycidolderivat, wobei wenigstens 10 % der Kettenenden mit einer einwertigen Gruppe versehen sind, bei der es sich typischerweise um eine cyanosubstituierte einwertige Kohlenwasserstoffgruppe handelt. Das Polyol besitzt hohe ionische Leitfähigkeit, bleibt auch bei Anwesenheit eines ionenleitenden Salzes in hoher Konzentration amorph und ist als Polymerelektrolyt geeignet.

Die WO 93/02112 beschreibt ein Verfahren zur Herstellung einer Dispersion, wobei man leicht vernetzte Polyvinylsaatpartikel mit einer ionisierenden Flüssigkeit quellen lässt, so dass die gequollenen Partikel ein wenigstens 5 mal größeres Volumen aufweisen als die Saatpartikel. Die Partikel können aus Glycidol aufgebaut sein.

Die EP 200 070 A beschreibt ein Verfahren zur Herstellung von Hydroxylgruppen aufweisenden Polymerisaten, die als Reaktionspartner für Polyisocyanate bei der Herstellung von Polyurethanen brauchbar sind. Die JP 01092281 beschreibt ein Polymer, das durch Propfpolymerisation von Ethylenoxid oder Glycidol auf ein Phenol-Aldehyd-Kondensat erhalten wird. Das Polymer ist als Additiv für eine Drucktinte brauchbar.

Die WO 02/40572 beschreibt einen dendritischen Polyether mit einem Kern aus einer Verbindung mit 2 oder mehreren Hydroxylgruppen und mindestens einer Generation an Verzweigungen, die aus einem Hydoxyoxethan mit wenigstens einer Hydroxylgruppe aufgebaut sind.

Gegenstand der vorliegenden Erfindung sind verzweigte hydroxylgruppenhaltige Hybridpolymere, die aufgebaut sind aus
a) einem Basispolymer, das einen Vernetzungsgrad von 0,2 bis 50 % und Gruppen mit einem aktiven Wasserstoffatom aufweist und ausgewählt ist unter Polyvinylalkoholen, teilverseiften Polyvinylacetaten, Polyethyleniminen, Polyaminen, Polythiolen und Polystyrolen, die Einheiten aufweisen, welche mit einer Hydroxyalkylgruppe funktionalisiert sind, und
b) Seitenketten, die über die Gruppen mit aktiven Wasserstoffatomen an das Basispolymer gebunden und aus mindestens einer Einheit aufgebaut sind, die von einer Polyhydroxyalkylverbindung mit mindestens drei Kohlenstoffatomen und mindestens 2 Hydroxylgruppen abgeleitet ist,
wobei die hydroxylgruppenhaltigen Hybridpolymere erhältlich sind, indem man ein Oxiran mit mindestens 3 Kohlenstoffatomen und mindestens 1 Hydroxylgruppe in Anwesenheit des Basispolymers, das Gruppen mit aktiven Wasserstoffatomen aufweist, anionisch polymerisiert.

Alkyl bzw. Alkylen steht im Rahmen der vorliegenden Erfindung für geradkettige oder verzweigte Alkylgruppen bzw. Alkylengruppen. Aryl steht vorzugsweise für Phenyl oder Naphthyl.

Bei den erfindungsgemäßen Polymeren handelt es sich um hochfunktionalisierte Polymere (Hybridpolymere), die dendritische Struktur aufweisen.

Ausgangskomponente für die erfindungsgemäßen Polymeren ist ein Basispolymer, das mehrere Gruppen mit einem aktiven Wasserstoffatom aufweist. Die Gruppen mit aktiven Wasserstoffatomen können direkt oder indirekt (über ein Zwischenglied/Linker) an die Polymerkette gebunden oder Teil der Polymerkette sein. Brauchbare Basispolymere, die Gruppen mit aktiven Wasserstoffatomen aufweisen, sind insbesondere Polyvinylalkohole, teilverseifte Polyvinylester, wie teilverseiftes Polyvinylacetat, Polyethylenimine, Polyamine, Polythiole und Derivate davon. Besonders bevorzugt sind jedoch Polystyrolharze, die mit Hydroxyalkylgruppen, insbesondere C₁-C₈-Hydroxyalkylgruppen an der Phenylgruppe funktionalisiert sind. Der Funktionalisierungsgrad beträgt vorzugsweise mindestens 0,1 mmol der Gruppen mit einem aktiven Wasserstoffatom pro g Polymer, insbesondere 0,1 bis 5 mmol pro g Polymer. Bevorzugte Beispiele sind Hydroxymethylstyrol und Hydroxyethylstyrol. Hydroxyalkylierte Polystyrolharze sind bekannt und beispiels-weise beschrieben in W. Rapp, Peptides 2000, Proceedings of the 26 th European Peptide Symposium, J. Martinez, J.A. Fehrentz (Eds.)EDK, Paris, France 2001, p969, sowie Rapp Polymere Produkte Katalog 2001/2002. Auch chirale Polymere können zur Anwendung kommen.

Geeignete Linker sind vor allem C₁-C₃-Alkylengruppen, insbesondere Methylen oder Ethylen, COOC₁-C₄-Alkylen oder NCH₂CH₂OH.

Der Vernetzungsgrad der Basispolymere liegt im Allgemeinen im Bereich von 0,1 bis 50 %, insbesondere 0,2 bis 15 %, speziell 0,2 bis 5 % und besonders bevorzugt 1 bis 3 %.

Die Seitenketten der erfindungsgemäßen Polymeren sind aus mindestens einer, insbesondere mindestens zwei oder drei Einheiten einer Polyhydroxyverbindung aufgebaut, die mindestens drei Kohlenstoffatome und mindestens zwei Hydroxylgruppen (die Hydroxylgruppen befinden sich an verschiedenen Kohlenstoffatomen) aufweisen. Bei der Polyhydroxyverbindung handelt es sich vorzugsweise um eine Polyhydroxyalkylverbindung, die insbesondere drei bis sechs Kohlenstoffatome und zwei bis drei Hydroxylgruppen aufweist. Bevorzugte Beispiele sind die folgenden Reste: 2,3-Dihydroxyprop-1-yl; 1,3-Dihydroxyprop-2-yl; 2,4-Dihydroxybut-1-yl; 3,4-Dihydroxybut-1-yl; und 2,3,4-Trihydroxybut-1-yl. Bevorzugte Einheiten sind 1,3-Dihydroxyprop-1-yl und insbesondere 2,3-Dihydroxyprop-1-yl.

Der Gehalt an Hydroxylgruppen im Polymer lässt sich durch die Zahl der Einheiten an Polyhydroxyverbindung und gegebenenfalls dem Funktionalisierungsgrad des Basispolymers steuern. Bevorzugt sind Polymere mit einem Gehalt an Hydroxylgruppen von mindestens 0,5 mmol pro Gramm Polymer, insbesondere 0,5 bis 10 mmol pro Gramm Polymer und besonders bevorzugt 2 bis 6 mmol pro Gramm Polymer.

Die Herstellung der erfindungsgemäßen Polymere erfolgt durch Umsetzung des Basispolymers, das Gruppen mit einem aktiven Wasserstoffatom aufweist, mit der Polyhydroxyverbindung oder einem funktionellen Äquivalent davon. Dabei wird zunächst eine Polyhydroxyverbindung an die Gruppen mit einem aktiven Wasserstoffatom des Basispolymers unter Ersatz des aktiven Wasserstoffatoms gebunden. Diese Reaktion wird am Beispiel eines Basispolymers mit einer Hydroxylgruppe als Gruppe mit einem aktiven Wasserstoffatom und Glycidol als funktionellem Äquivalent für die 2,3-Dihydroxypropylgruppe als Polyhydroxyverbindung schematisch erläutert: 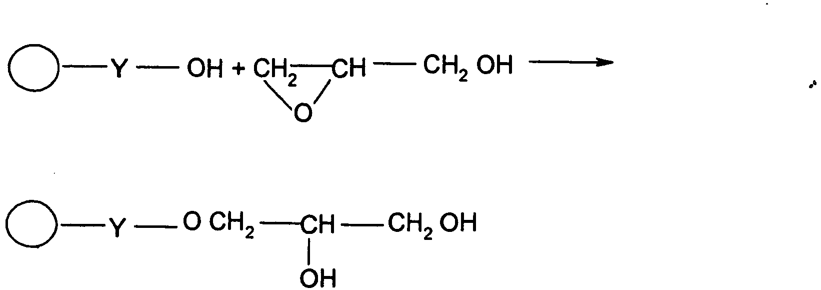 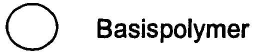 Y = Linker oder chemische Bindung

Man erhält eine Verbindung, bei der eine 2,3-Dihydroxypropyleinheit an die OH-Gruppe des Polymers gebunden ist, so dass das resultierende Polymer zwei freie OH-Gruppen pro Seitenkette aufweist (Produkt erster Generation). An die beiden freien OH-Gruppen kann jeweils ein weiteres Molekül Glycidol gebunden werden (Produkt zweiter Generation), so dass eine Seitenkette mit insgesamt vier freien Hydroxylgruppen resultiert. Die Zahl der freien OH-Gruppen kann dann durch Anbindung weiterer Glycidolmoleküle in beliebiger Weise erhöht werden. Aufgrund der mindestens 2 OH-Gruppen der Polyhydroxyverbindung kommt es zu einer exponentiellen Erhöhung der Zahl der OH-Gruppen unter Bildung einer dendritischen Struktur.

Man erhält somit hydroxylgruppenhaltige Hybridpolymere, deren Struktur anhand eines Produktes der 3. bis 5. Generation nachfolgend angegeben ist:

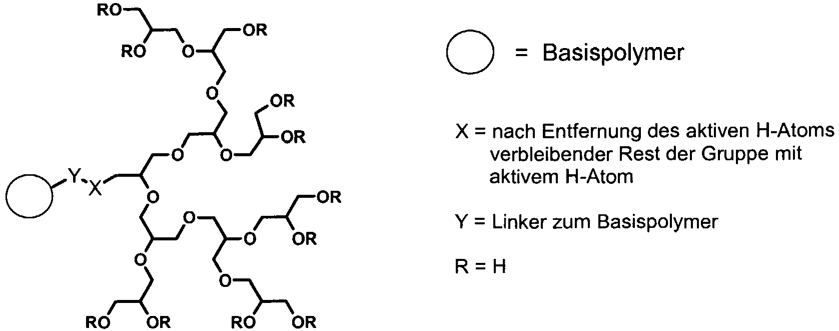

Die Einführung der Polyhydroxyverbindung kann in üblicher, dem Fachmann bekannter Weise erfolgen. Besonders bevorzugt ist es jedoch, das Basispolymer mit dem entsprechenden Oxiran der Polyhydroxyverbindung, z.B. Glycidol, 4-Hydroxy-1-butenoxid; 3,4-Dihydroxy-1-butenoxid, zur Reaktion zu bringen. Die Umsetzung erfolgt in Anwesenheit einer Base oder einer Säure. Geeignete Basen sind Alkalimetallhydroxide, wie Kaliumhydroxid, Phosphazenbasen, Alkoxide, und insbesondere sterisch anspruchsvolle Alkoxide, wie Kaliumisopropylat, Kaliumisobutylat und besonders bevorzugt Kaliumtertiärbutylat. Als Säuren sind anorganische und organische Säuren sowie Lewis-Säuren geeignet. Beispiele hierfür sind HCl, H₂SO₄, Toluolsulfonsäure, Aluminiumchlorid, Titantetrachlorid und Bortrifluorid. Im Allgemeinen kommen 0,1 bis 5 mmol Base pro Gramm Basispolymer zur Anwendung.

Die Umsetzung wird in einem gegenüber Säuren oder Basen stabilen, nicht protischen organischen Lösungsmittel durchgeführt, das in der Lage ist, das Basispolymer zu quellen. Geeignete Lösungsmittel sind Ether, wie Dioxan, Tetrahydrofuran, Ethylenglykoldimethylether, Kohlenwasserstoffe, wie Toluol oder Xylol, Acetonitril und insbesondere Dimethylformamid, Dimethylacetamid sowie N-Methylpyrrolidon.

Die Reaktionstemperatur ist nicht kritisch, sie hängt von der Reaktivität des Basispolymers und der Polyhydroxyverbindung ab. Im Allgemeinen erfolgt die Umsetzung bei einer Temperatur im Bereich von 0 bis 200°C, vorzugsweise 60 bis 140 °C und insbesondere 80 bis 120 °C. Der Druck liegt im Allgemeinen im Bereich von 0 bis 10 bar, bevorzugt 0,5 bis 5 bar und insbesondere 1 bis 3 bar.

Bei der Umsetzung mit der Polyhydroxyverbindung können auch geeignete Comonomere verwendet werden. Die Comonomere können auch nachträglich mit den freien OH-Gruppen des Polymers zur Umsetzung gebracht werden. Beispiele für geeignete Comonomere sind Ethylenoxid, Propylenoxid, Butenoxid, Butadienmonoxid, Hexenoxid, Styroloxid, Cyclohexenoxid, Cyclopentenoxid, Hexadecenoxid, Benzyloxiran, Allylglycidylether, Isopropylglycidylether, Phenylglycidylether, Benzylglycidylether, Nonylphenylglycidylether, Octylglycidylether, Decylglycidylether, Methylglycidylether und Gemische davon. Der Anteil an Comonomer beträgt maximal 50 mol-%, vorzugsweise 0,1 bis 30 mol-% und insbesondere 0,1 bis 10 mol-%, bezogen auf die Polyhydroxyverbindung.

Die erfindungsgemäßen Polymere sind in dem Reaktionsgemisch unlöslich und können daher auf einfache Weise durch Abfiltrieren gewonnen werden. Sie können als solche verwendet werden und sind beispielsweise geeignet als hochfunktionale Festphasenträger für chemische Umsetzungen, Chromatographie oder biologische Assays. Sie zeigen gute Quellungseigenschaften selbst in protischen Lösungsmitteln

Die erhaltenen Polymere können auch weiter funktionalisiert werden, indem die Hydroxylgruppen in eine andere für den speziellen Anwendungszweck geeignete funktionelle Gruppe umgewandelt werden oder indem eine andere funktionelle Gruppe durch Umsetzung der Hydroxylgruppen mit einem entsprechenden Reagens eingeführt wird.

Gegenstand der vorliegenden Erfindung sind daher auch funktionalisierte Polymere auf Basis der erfindungsgemäßen hydroxylgruppenhaltigen Polymere. Bevorzugt sind funktionalisierte Polymere, bei denen zumindest ein Teil der OH-Gruppen in eine andere funktionelle Gruppe überführt ist oder als Gruppe der Formel

-O-A-Z

vorliegt, wobei A für ein Bindeglied und Z für eine funktionelle Gruppe steht. Bei dem Bindeglied handelt es sich vorzugsweise um einen Rest, der ausgewählt ist unter C₁-C₂₀-Alkylen, gegebenenfalls substituiertes Phenylen, 1,2-, 1,3- oder 1,4-Xylylen, wobei der Alkylenrest geradkettig oder verzweigt sein kann, 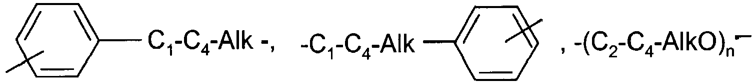 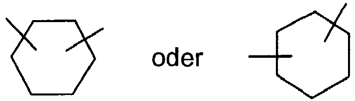 wobei Alk für Alkylen steht und n für 1 bis 20 steht.

Als Beispiel für die Struktur der funktionalisierten Polymere wird auf die oben angegebene Formel I verwiesen, worin X und Y die oben angegebenen Bedeutungen besitzen und ein Teil oder alle Reste R für eine funktionelle Gruppe oder AZ stehen, wobei A und Z die oben angegebenen Bedeutungen besitzen.

Zwei, vorzugsweise benachbarte OH-Gruppen des Polymers können auch an ein Metall unter Bildung eines Chelates gebunden sein. Bei dem Metall handelt es sich vorzugsweise um ein 3- oder 4-wertiges Metall, vorzugsweise B, Si oder Ti. Man erhält eine chelatförmige Struktur der Formel 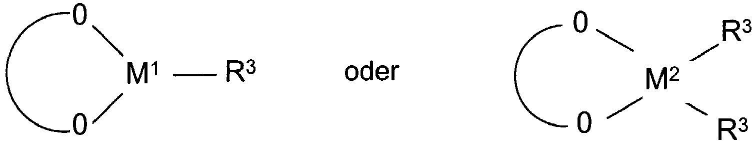 wobei M¹ für ein dreiwertiges Metall, M² für ein vierwertiges Metall und die Reste R³, die gleich oder verschieden sein können für C₁-C₆-Alkyl oder Aryl, das gegebenenfalls durch ein oder zwei C₁-C₄-Alkyl, Halogen (insbesondere F, Cl) OH, OC₁-C₄-Alkyl oder NO₂ substituiert ist, stehen.

Die funktionelle Gruppe ist vorzugsweise ausgewählt unter NR¹R², SH, COOH, COOR, CHO, OCOR, NHCOR, OCONHR, OCSNHR, CN oder Halogen, wobei R für C₁-C₈-Alkyl oder Phenyl, das gegebenenfalls durch C₁-C₄-Alkyl substituiert sein kann, steht und R¹ und R² unabhängig voneinander für H oder C₁-C₆-Alkyl, Benzyl, Aryl und Derivate davon stehen kann.

Die Herstellung der erfindungsgemäßen funktionalisierten Polymere erfolgt in üblicher, dem Fachmann bekannter Weise. Folgende Reaktionen sind geeignet zur Einführung einer anderen funktionellen Gruppe:
a) Einführung von NR¹R²:
   Umsetzung mit Acrylnitril oder Methacrylnitril in Anwesenheit einer Base, wie Kalium-tert-butylat, und Reduktion des Nitrils mit einer komplexen Hydridverbindung, wie Lithiumaluminiumhydrid, Diisobutylaluminiumhydrid oder katalytischer Hydrierung (z.B. mit Raney-Nickel). Das erhaltene Amin kann gewünschtenfalls mit einem geeigneten Alkylierungsreagens, wie einem C₁-C₈-Akylbromid oder -chlorid mono- oder dialkyliert werden.
b) Einführung einer Halogengruppe:
   Umsetzung des Polymers mit SOCl₂, SOBr₂, CCl₄· PPh₃ oder CBr₄· PPh₃, POCl₃, PCl₃, PCl₅..
c) Einführung einer Thiolgruppe:
   Umsetzung des gemäß b) erhaltenen halogenierten Produktes mit Natrium- oder Kaliumsulfid in Anwesenheit einer Base.
d) Einführung von CO₂H, CO₂R und CHO:
   Umsetzung des hydroxylgruppenhaltigen Polymers mit einer chlorierten oder bromierten Alkylcarbonsäure oder dem entsprechenden Carbonsäureester in Anwesenheit einer Base und gegebenenfalls selektive Reduktion zu CHO.
e) Einführung von OCOR:
   Durchführung der Mitsunobu-Reaktion, indem das hydroxylgruppenhaltige Polymer mit R-COOH in Anwesenheit von Triphenylphosphin und Azodicarbonsäureester kondensiert wird.
   Das gemäß a) erhaltene aminierte Produkt kann zur Einführung von NHCOR ebenfalls einer Mitsunobu -Reaktion unterzogen werden.
f) Einführung von OCONHR und OCSNHR:
   Umsetzung des Polymers mit dem entsprechenden Isocyanat oder Isothiocyanat.
g) Einführung von CN:
   Umsetzung mit einem entsprechenden chlorierten oder bromierten Alkylcyanid nach der in c) angegebenen Methode oder Umsetzung mit Acrylnitril oder Methacrylnitril gemäß a).
h) Einführung einer Metallchelatgruppe:
   Die entsprechende Säure, z.B. die Boronsäure R³B(OH)₂, wird mit dem hydroxylgruppenhaltigen Polymer 1-72 Stunden bei 30-80 °C umgesetzt. Alternativ wird das entsprechende Metallhalogenid, gegebenenfalls in Anwesenheit einer Base, mit dem hydroxylgruppenhaltigen Polymer umgesetzt.

Die erfindungsgemäßen hydroxylgruppenhaltigen und die funktionalisierten Polymere stellen wertvolle hochfunktionalisierte Festphasenpolymere dar. Sie sind insbesondere brauchbar für chemische Umsetzungen, beispielsweise als Festphasenträger für Synthesen (auch optische Synthesen), Reagenzien und Katalysatoren. Weiter sind die Polymere als Affinitätsharze und in der Chromatographie als Adsorbentien brauchbar. Mit besonderem Vorteil kommen sie in der Diagnostik, beispielsweise für Proteinassays und zum Maskieren und Immobilisieren von Proteinen zur Anwendung.

Die nachfolgenden Beispiele erläutern die Erfindung, ohne sie zu begrenzen. Es werden folgende Abkürzungen verwendet:
- THF:: Tetrahydrofuran
- DMF:: Dimethylformamid
- PS:: Polystyrol
- PG:: Polyglycerin
- KOtBu:: Kalium-tert-butylat
- HV:: Hochvakuum

Die erhaltenen Polymere wurden durch IR- und Elementaranalyse charakterisiert. Die Beladung an funktionellen Gruppen wurde mittels Ankupplung von Chromophoren und UV-Absorptionsmessung bestimmt. (J.Meienhofer, M.Waki, E.P.Heimer, T.J.Lambros,R.C.Makofske, C.D. Chang, Int.J.Peptide Protein Res. (1979),13, 35-42)

### Beispiel 1:

### Polystyrol-Polyglyceri n-Pfropfpolymere

In die getrocknete Reaktionsapparatur (Dreihalsreaktor mit Destillationsbrücke) wurden unter Argon 5,0 g PS-CH₂CH₂-OH (hydroxyethyliertes Polystyrol; 1,2 mmol OH-Gruppen pro g Polystyrol) eingewogen. Nun wurden 1 ml Kalium-*tert*-butylat-Lösung (1 M in THF) hinzugefügt. Zu dieser Lösung wurden 20 ml DMF gegeben und die Reaktionsmischung wurde unter Rühren (250 U/Min.) auf 120 °C erhitzt. Anschließend wurden 10 ml Glycidol in 50 ml THF über 5 h langsam zugegeben. Nach beendeter Zugabe wurde der Reaktor auf Raumtemperatur abgekühlt und anschließend mit 1,1 ml 1 M HCl versetzt. Zur Aufarbeitung wurde das Polymerharz abfiltriert, mit 100 ml THF/Methanol, dann mit Diethylether gewaschen und getrocknet. Es wurden 6.2 g Polymerharz isoliert. Die analytischen Daten (Elementaranalyse, Endgruppenbestimmung) zeigen den Einbau von im Mittel 2-3 Generationen Glycidol (entsprechend ca. 6-8 OH-Funktionen pro Seitenkette bzw. ca. 3 mmol OH/g-Polymer) an.

### Beispiel 2

### Umsetzung mit Acrylnitril zu Polystyrol-polyglycerin-propannitril

1.5 g PS-PG-Pfropfpolymer aus Beispiel 1 wurden in einem in 250 ml Dreihalskolben mit Rührer, Kühler und Tropftrichter eingewogen. Unter Inertgas wurde das Polymer in 50 ml trockenem THF gequollen und mit 0.8 ml 1 M KOtBu-Lsg. in THF versetzt. Anschließend wurde auf 0 °C gekühlt und 2 ml (30 mmol) Acrylnitril wurden unter Rühren langsam zugesetzt. Der Ansatz wurde 3 Tage bei 0 °C gerührt. Zur Aufarbeitung wurde mit 3 Tropfen Eisessig versetzt, filtriert, mit THF/MeOH (Gradient), anschließend mit Diethylether gewaschen und getrocknet. Es wurden 1.6 g Polymerharz isoliert. Die Elementaranalyse ergab einen Gehalt von 3.6 Gew.-% Stickstoff, was einer vollständigen Umsetzung der OH-Gruppen entspricht.

### Beispiel 3

### Reduktion des Nitrils zu Polystyrol-Polyglycerin-propylamin

700 mg des Polynitrils gemäß Beispiel 2 wurden in einen 100 ml Dreihalskolben mit Rückflusskühler und Tropftrichter eingewogen. Unter Schutzgas wurden 30 ml trockenes THF zugesetzt. Während 2 h wurden 10 ml Diisobutylaluminiumhydrid-Lösung (1 M in THF) langsam zugetropft. Anschließend wurde der Ansatz 48 h unter Rückfluss erhitzt (Ölbad ca. 75 °C). Zur Aufarbeitung wurden 20 ml Methanol zugegeben, 24 h gerührt, der Niederschlag wurde mit 20 ml 2 N HCl aufgelöst und das Gemisch mit 2 N Natronlauge alkalisch gemacht (pH = 14). Die Reaktionsmischung wurde über eine Fritte filtriert, mit Wasser (ca. 300 ml), Wasser/MeOH, MeOH, MeOH/Aceton, Aceton, THF, Ether (jeweils ca. 50 ml) gewaschen und im HV getrocknet. Es wurden 650 mg Polymerharz isoliert. Das IR zeigte das Verschwinden der Nitrilbande an. Der Nachweis der freien Aminogruppen erfolgte über IR-Spektrum und Elementaranalyse sowie durch Amidkupplung eines Farbstoffes und UV-Vis-Bestimmung.

### Beispiel 4

### Verseifung des Nitrils zu Polystyrol-Polyglycerin-propanoat

700 mg des Polynitrils gemäß Beispiel 2 wurden in einen 250 ml Dreihalskolben mit Rückflusskühler und Tropftrichter eingewogen. Nach 1 h Evakuieren wurde mit Stickstoff belüftet und die Polymerbeads mit 50 ml Tetrahydrofuran p.a. versetzt. Unter schwachem Rühren mit einem Magnetrührer wurde das Polymer 12h angequollen. Nach Zugabe von 15 ml 3 N Natronlauge wurde 1 ml 30%ige Wasserstoffperoxid-Lösung langsam zum Reaktionsgemisch getropft. Anschließend wurde der Ansatz 6 h unter Rückfluss (ca. 85°C Ölbadtemperatur) erhitzt und nachfolgend 3 Tage bei RT gerührt. Zur Aufarbeitung wurden die Beads abfiltriert, mit Wasser/Tetrahydrofuran 1:1 (200 ml), Wasser (300 ml), Wasser/Methanol 1:1 (100 ml), Methanol, Methanol/Aceton 1:1, Aceton, Aceton/ Tetrahydrofuran 1:1, Tetrahydrofuran und Diethylether (jeweils 50 ml) gewaschen und schließlich im HV getrocknet. Es wurden 592 mg des Polystyrol-Polyglycerin-propanoats in Form eines gelb gefärbten Feststoffs erhalten.

### Beispiel 5

### PS-PG-3-Nitrobenzolboronester

Die Trägerung der 3-Nitrobenzolboronsäure (M = 166,9 g mol⁻¹) auf ein gemäß Beispiel 1 erhaltenes PS-PG-Pfropfpolymer (Beladung 2,69 mmol g-1) erfolgte, indem 50,0 mg (0,13 mmol Diol-Gruppen) der Beads in trockenem Dichlormethan 4 Stunden bei Raumtemperatur in 15 ml Dichlormethan vorgequollen und dann bei 60°C mit einem zehnfachen Überschuss an Boronsäure (217,0 mg, 1,3 mmol) 28 Stunden umgesetzt wurden. Anschließend wurde das Gemisch über eine Glasfritte (d4) filtriert, dreimal mit jeweils 15 ml trockenem Dichlormethan nachgewaschen und das Produkt nachfolgend im Hochvakuum getrocknet. Es konnten 64 mg eines bräunlichen Pulvers erhalten werden.
Elementaranalyse: C: 64,84 %; H: 6,52 %; N: 2,57 %;
IR-Spektrum: vₘₐₓ = 1357 cm⁻¹

Mit Hilfe des IR-Spektrums konnte anhand des Verhältnisses der Intensitäten der CH-Valenzschwingung bei 2912 cm⁻¹ und der OH-Bande bei 3417 cm⁻¹ eine Aussage bezüglich der erhaltenen Beladung mit Boronsäure getroffen werden. Auf diesem Wege wurde der Umsatz (Beladung der 1,2-Diole) zu >95 % ermittelt. Somit ergibt sich für den PS-PG-3-Nitrobenzolboronester eine effektive Beladung von 1,76 mmol g⁻¹.

## Patentansprüche

1. Hydroxylgruppenhaltige Hybridpolymere, die aufgebaut sind aus
a) einem Basispolymer, das einen Vernetzungsgrad von 0,2 bis 50 % und Gruppen mit einem aktiven Wasserstoffatom aufweist und ausgewählt ist unter Polyvinylalkoholen, teilverseiften Polyvinylacetaten, Polyethyleniminen, Polyaminen, Polythiolen und Polystyrolen, die Einheiten aufweisen, welche mit einer Hydroxyalkylgruppe funktionalisiert sind, und
b) Seitenketten, die über die Gruppen mit aktiven Wasserstoffatomen an das Basispolymer gebunden und aus mindestens einer Einheit aufgebaut sind, die von einer Polyhydroxyalkylverbindung mit mindestens drei Kohlenstoffatomen und mindestens 2 Hydroxylgruppen abgeleitet ist,
wobei die hydroxylgruppenhaltigen Hybridpolymere erhältlich sind, indem man ein Oxiran mit mindestens 3 Kohlenstoffatomen und mindestens 1 Hydroxylgruppe in Anwesenheit des Basispolymers, das Gruppen mit aktiven Wasserstoffatomen aufweist, anionisch polymerisiert.

2. Polymere nach Anspruch 1, wobei das Basispolymer ein Polystyrol ist, das Einheiten aufweist, welche mit einer Hydroxyalkylgruppe funktionalisiert sind.

3. Polymere nach Anspruch 1 oder 2, wobei die Seitenketten aus 2,3-Dihydroxypropyleinheiten aufgebaut sind.

4. Polymere nach einem der vorgehenden Ansprüche, wobei der Gehalt an Hydroxylgruppen mindestens 0,5 mmol pro g Polymer beträgt.

5. Polymere nach Anspruch 4, wobei der Gehalt an Hydroxylgruppen im Bereich von 0,5 bis 10, insbesondere 2 bis 6 mmol pro g Polymer liegt.

6. Verfahren zur Herstellung der Polymere nach einem der Ansprüche 1 bis 5, wobei man ein Oxiran mit mindestens 3 Kohlenstoffatomen und mindestens 1 Hydroxylgruppe in Anwesenheit des Basispolymers, das Gruppen mit aktiven Wasserstoffatomen aufweist, anionisch polymerisiert.

7. Funktionalisierte Polymere auf Basis der hydroxylgruppenhaltigen Polymere nach einem der Ansprüche 1 bis 5, wobei zumindest ein Teil der Hydroxylgruppen in eine andere funktionelle Gruppe überführt ist oder als Gruppe der Formel
-O-A-Z
vorliegt, wobei A für ein Bindeglied und Z für eine funktionelle Gruppe steht.

8. Funktionalisierte Polymere nach Anspruch 7, wobei die funktionelle Gruppe ausgewählt ist unter NR¹R², SH, CO₂H, CO₂R, CHO, OCOR, NHCOR, OCONHR, OCSNHR, CN, BR³ oder Halogen, wobei R für C₁-C₈-Alkyl steht und R¹ und R² unabhängig voneinander für H oder C₁-C₆-Alkyl stehen und R³ für C₁-C₆-Alkyl oder Aryl, das gegebenenfalls durch C₁-C₄-Alkyl, Halogen, OH, OC₁-C₄-Alkyl oder NO₂ substituiert ist, steht, wobei die Gruppe BR³ an zwei verschiedene Sauerstoffatome des Polymers gebunden ist.

9. Funktionelle Polymere nach Anspruch 7 oder 8, wobei es sich bei dem Bindeglied um einen Rest handelt, der ausgewählt ist unter C₁-C₂₀-Alkylen, Phenylen, das gegebenenfalls durch C₁-C₄-Alkyl substituiert ist, 1,2-, 1,3- oder 1,4-Xylylen.

10. Verwendung der Polymere nach einem der Ansprüche 1 bis 5 zur Herstellung von funktionalisierten Polymeren.

11. Verwendung der Polymere nach einem der Ansprüche 1 bis 5 und 7 bis 9 als Träger in chemischen Synthesen, in der Chromatographie, als Sorbentien, in der Diagnostik und/oder zum Maskieren und Immobilisieren von Proteinen.

## Claims

1. Hydroxyl group-containing hybrid polymers, comprising
a) a base polymer having a degree of cross-linking of 0.2 to 50% and groups with an active hydrogen atom, which is selected from polyvinyl alcohols, partially saponified polyvinyl acetates, polyethyleneimines, polyamines, polythiols and polystyrenes having units functionalized with a hydroxyalkyl group, and
b) side chains bound to the base polymer via the groups with active hydrogen atoms and comprising at least one unit derived from a polyhydroxyalkyl compound having at least three carbon atoms and at least 2 hydroxyl groups,
wherein the hydroxyl group-containing hybrid polymers are obtainable by anionically polymerizing an oxirane having at least 3 carbon atoms and at least 1 hydroxyl group in the presence of the base polymer having groups with active hydrogen atoms.

2. The polymers according to claim 1, wherein the base polymer is a polystyrene having units functionalized with a hydroxyalkyl group.

3. The polymers according to claim 1 or 2, wherein the side chains comprise 2,3-dihydroxypropyl units.

4. The polymers according to any one of the preceding claims, wherein the concentration of hydroxyl groups is at least 0.5 mmol per g of polymer.

5. The polymers according to claim 4, wherein the concentration of hydroxyl groups is in the range of 0.5 to 10, especially 2 to 6 mmol per g of polymer.

6. A process for the preparation of the polymers according to any one of claims 1 to 5, which comprises anionically polymerizing an oxirane having at least 3 carbon atoms and at least 1 hydroxyl group in the presence of the base polymer having groups with active hydrogen atoms.

7. Functionalized polymers based on the hydroxyl group-containing polymers according to any one of claims 1 to 5, wherein at least a fraction of the hydroxyl groups is converted into another functional group or is present as a group of the formula
-O-A-Z,
wherein A is a linker and Z is a functional group.

8. The functionalized polymers according to claim 7, wherein the functional group is selected from the group consisting of NR¹R², SH, CO₂H, CO₂R, CHO, OCOR, NHCOR, OCONHR, OCSNHR, CN, BR³ or halogen, wherein R is C₁-C₈ alkyl and R¹ and R² are independently H or C₁-C₆ alkyl and R³ is C₁-C₆ alkyl or aryl optionally substituted with C₁-C₄ alkyl, halogen, OH, OC₁-C₄ alkyl or NO₂, wherein the group BR³ is bound to two different oxygen atoms of the polymer.

9. The functional polymers according to claim 7 or 8, wherein the linker is a moiety selected from C₁-C₂₀ alkylene, phenylene optionally substituted with C₁-C₄ alkyl, 1,2-, 1,3- or 1,4-xylylene.

10. Use of the polymers according to any one of claims 1 to 5 for the production of functionalized polymers.

11. Use of the polymers according to any one of claims 1 to 5 and 7 to 9 as carriers in chemical syntheses, in chromatography, as sorbents, in diagnostics and/or for masking and immobilizing proteins.

## Revendications

1. Polymères hybrides contenant des groupes hydroxyle, qui sont formés par :
a) un polymère de base, qui présente un degré de réticulation de 0,2 à 50 % et comprend des groupes contenant un atome d'hydrogène actif, et est choisi parmi les alcools polyvinyliques, les polyacétates de vinyle partiellement saponifiés, les polyéthylène-imines, les polyamines, les polythiols et les polystyrènes, qui comprennent des unités qui sont fonctionnalisées avec un groupe hydroxyalkyle, et
b) des chaînes latérales, qui sont reliées au polymère de base par les groupes contenant des atomes d'hydrogène actifs et qui sont formées par au moins une unité qui est dérivée d'un composé polyhydroxyalkyle contenant au moins trois atomes de carbone et au moins 2 groupes hydroxyle,
les polymères hybrides contenant des groupes hydroxyle pouvant être obtenus par polymérisation anionique d'un oxirane contenant au moins 3 atomes de carbone et au moins 1 groupe hydroxyle en présence du polymère de base qui comprend des groupes contenant des atomes d'hydrogène actifs.

2. Polymères selon la revendication 1, dans lesquels le polymère de base est un polystyrène qui comprend des unités qui sont fonctionnalisées avec un groupe hydroxyalkyle.

3. Polymères selon la revendication 1 ou 2, dans lesquels les chaînes latérales sont formées par des unités 2,3-dihydroxypropyle.

4. Polymères selon l'une quelconque des revendications précédentes, dans lesquels la teneur en groupes hydroxyle est d'au moins 0,5 mmole par g de polymère.

5. Polymères selon la revendication 4, dans lesquels la teneur en groupes hydroxyle se situe dans la plage allant de 0,5 à 10, notamment de 2 à 6 mmoles par g de polymère.

6. Procédé de fabrication des polymères selon l'une quelconque des revendications 1 à 5, selon lequel un oxirane contenant au moins 3 atomes de carbone et au moins 1 groupe hydroxyle est polymérisé anioniquement en présence du polymère de base, qui comprend des groupes contenant des atomes d'hydrogène actifs.

7. Polymères fonctionnalisés à base des polymères contenant des groupes hydroxyle selon l'une quelconque des revendications 1 à 5, dans lesquels au moins une partie des groupes hydroxyle sont transformés en un autre groupe fonctionnel ou se présentent sous la forme d'un groupe de formule
-O-A-Z
dans laquelle A représente un élément de liaison et Z représente un groupe fonctionnel.

8. Polymères fonctionnalisés selon la revendication 7, dans lesquels le groupe fonctionnel est choisi parmi NR¹R², SH, CO₂H, CO₂R, CHO, OCOR, NHCOR, OCONHR, OCSNHR, CN, BR³ ou halogène, R représentant alkyle en C₁-C₈ et R¹ et R² représentant indépendamment l'un de l'autre H ou alkyle en C₁-C₆, et R³ représentant alkyle en C₁-C₆ ou aryle, qui est éventuellement substitué par alkyle en C₁-C₄, halogène, OH, O-alkyle en C₁-C₄ ou NO₂, le groupe BR³ étant relié à deux atomes d'oxygène différents du polymère.

9. Polymères fonctionnels selon la revendication 7 ou 8, dans lesquels l'élément de liaison consiste en un radical qui est choisi parmi alkylène en C₁-C₂₀, phénylène, qui est éventuellement substitué par alkyle en C₁-C₄, 1,2-, 1,3- ou 1,4-xylylène.

10. Utilisation des polymères selon l'une quelconque des revendications 1 à 5 pour la fabrication de polymères fonctionnalisés.

11. Utilisation des polymères selon l'une quelconque des revendications 1 à 5 et 7 à 9 en tant que supports dans des synthèses chimiques, dans la chromatographie, en tant que sorbants, dans le diagnostic et/ou pour le masquage et l'immobilisation de protéines.
